(19) Europäisches Patentamt / European Patent Office / Office européen des brevets

(11) **EP 4 400 706 A1**

(12) **EUROPEAN PATENT APPLICATION**
published in accordance with Art. 153(4) EPC

(43) Date of publication:
**17.07.2024 Bulletin 2024/29**

(21) Application number: **22880974.5**

(22) Date of filing: **11.10.2022**

(51) International Patent Classification (IPC):
*F02D 23/00* (2006.01)   *F02P 5/145* (2006.01)
*F02P 5/15* (2006.01)   *F02P 5/152* (2006.01)
*F02D 13/02* (2006.01)   *F02D 45/00* (2006.01)

(52) Cooperative Patent Classification (CPC):
**F02D 13/02; F02D 23/00; F02D 45/00; F02P 5/145;
F02P 5/15; F02P 5/152;** Y02T 10/12; Y02T 10/40

(86) International application number:
**PCT/JP2022/037761**

(87) International publication number:
**WO 2023/063279 (20.04.2023 Gazette 2023/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.10.2021 JP 2021168948**

(71) Applicant: **MITSUBISHI HEAVY INDUSTRIES
ENGINE
& TURBOCHARGER, LTD.
Sagamihara-shi, Kanagawa 252-5293 (JP)**

(72) Inventors:
• **ANDO, Junnosuke
Tokyo 100-8332 (JP)**
• **YOSHIZUMI, Hiroshi
Sagamihara-shi, Kanagawa 252-5293 (JP)**
• **ISHIDA, Michiyasu
Sagamihara-shi, Kanagawa 252-5293 (JP)**
• **KOAKUTSU, Takahiro
Sagamihara-shi, Kanagawa 252-5293 (JP)**
• **SHIMIZU, Masahiro
Sagamihara-shi, Kanagawa 252-5293 (JP)**

(74) Representative: **Studio Torta S.p.A.
Via Viotti, 9
10121 Torino (IT)**

(54) **ENGINE CONTROL DEVICE AND ENGINE SYSTEM**

(57) This engine control device, for controlling an engine with a turbocharger, is provided with: a parameter acquisition unit configured to acquire a first parameter relating to the engine operation state; an insufficient air supply determination unit for determining whether or not an insufficiency in the air supply to the engine has occurred; an ignition timing map selection unit configured to select, from multiple ignition timing maps that indicate the relation between the first parameter and the engine ignition timing, an ignition timing map that corresponds to the determination result of the insufficient air supply determination unit; and an ignition timing determination unit configured to determine the engine ignition timing on the basis of the first parameter acquired by the parameter acquisition unit and the ignition timing map selected by the ignition timing map selection unit.

EP 4 400 706 A1

FIG. 5

```
                    START

                       │
                       ▼
         ┌──────────────────────────┐
         │   CALCULATE Ga/Sa        │───S101
         └──────────────────────────┘
                       │
                       ▼         S102
                  ╱────────────╲              SECOND MAP
                 ╱  DETERMINE    ╲──────────────────────────────┐
                 ╲ SELECTED MAP  ╱                              │
                  ╲────────────╱                                │
         FIRST MAP     │                                        │
                       │    S103a                               │     S103b
                  ╱────────────╲  No      No  ╱─────────────────╲
                 ╱  Ga/Sa ≤ Rth1?╲─────┐  ┌──╱   Ga/Sa ≥ Rth2?   ╲
                 ╲              ╱      │  │  ╲                   ╱
                  ╲────────────╱       │  │   ╲─────────────────╱
                 Yes  │ ◄────────────┐ │  │              Yes │
                      │    S104a     │ │  └──────────────────┘
                      ▼              │ │                     │
         ┌──────────────────────────┐│ └──────────┐         │   S104b
         │  SELECT SECOND MAP Mi2   ││            ▼         ▼
         └──────────────────────────┘│  ┌──────────────────────────┐
                       │             │  │  SELECT FIRST MAP Mi1    │
                       │             │  └──────────────────────────┘
                       ▼◄────────────┴─────────────┘
         ┌──────────────────────────┐
         │ DETERMINE IGNITION TIMING│───S105
         │   USING SELECTED MAP     │
         └──────────────────────────┘
                       │
                       ▼
         ┌──────────────────────────┐
         │  CONTROL IGNITION TIMING │───S106
         └──────────────────────────┘
                       │
                       ▼
                     END
```

**Description**

Technical Field

The present disclosure relates to an engine control device and an engine system.

The present application claims the benefit of priority based on Japanese Patent Application No. 2021-168948 filed to the Japanese Patent Office on October 14, 2021, the content of which is incorporated herein by reference.

Background Art

PTL 1 discloses an engine device for the purpose of suppressing a decrease in thermal efficiency at the same time as implementing a stable engine operation. The engine device is provided with a control unit that determines whether or not a charge air amount (asupplied air amount of an engine) in premixed combustion in a cylinder is insufficient, in which the control unit is configured to suppress knocking of the engine by performing a retarding control of an ignition timing of an ignition device stepwise in a case where it is determined that the charge air amount is insufficient.

Citation List

Patent Literature

[PTL 1] International Publication No. 2017/013939

Summary of Invention

Technical Problem

In the method according to PTL 1, since the retarding control of the ignition timing of the ignition device is performed stepwise in a case where it is determined that the charge air amount of the engine is insufficient, it is difficult to quickly improve the insufficiency of the charge air amount. Ideas for quickly improving the insufficiency of the charge air amount are not disclosed in PTL 1.

In view of the above circumstances, a purpose of at least one embodiment of the present disclosure is to provide an engine control device that can quickly improve insufficiency of charge air amount and an engine system provided with the engine control device.

Solution to Problem

In order to achieve the purpose, an engine control device according to at least one embodiment of the present disclosure is an engine control device for controlling an engine with a turbocharger and includes a parameter acquisition unit configured to acquire a first parameter indicating an operation state of the engine, a charge air amount insufficiency determination unit for determining whether or not insufficiency of charge air amount of the engine has occurred, an ignition timing map selection unit configured to select an ignition timing map corresponding to a determination result of the charge air amount insufficiency determination unit from a plurality of ignition timing maps indicating a relationship between the first parameter and an ignition timing of the engine, an ignition timing determination unit configured to determine the ignition timing of the engine based on the first parameter acquired by the parameter acquisition unit and on the ignition timing map selected by the ignition timing map selection unit, and an ignition timing control unit configured to control the ignition timing based on the ignition timing determined by the ignition timing determination unit.

In order to achieve the purpose, an engine system according to at least one embodiment of the present disclosure includes an engine, a turbocharger, and the engine control device.

Advantageous Effects of Invention

According to at least one embodiment of the present disclosure, an engine control device that can quickly improve insufficiency of charge air amount and an engine system including the engine control device are provided.

Brief Description of Drawings

Fig. 1 is a schematic diagram illustrating an example of a configuration of an engine system 2 according to one embodiment.

Fig. 2 is a diagram illustrating an example of a hardware configuration of an engine control device 8 illustrated in Fig. 1.

Fig. 3 is a diagram illustrating an example of a functional configuration of the engine control device illustrated in Figs. 1 and 2.

Fig. 4 is a diagram illustrating an example of a plurality of ignition timing maps.

Fig. 5 is a flowchart illustrating an example of a method of selecting an ignition timing map Mi via an ignition timing map selection unit 48.

Fig. 6 is a flowchart illustrating another example of the method of selecting the ignition timing map Mi via the ignition timing map selection unit 48.

Fig. 7 is a schematic diagram illustrating an example of a configuration of the engine system 2 according to another embodiment.

Description of Embodiments

Hereinafter, several embodiments of the present disclosure will be described with reference to the accompanying drawings. Dimensions, materials, shapes, relative disposition, and the like of constituents described as embodiments or illustrated in the drawings are not intended to limit the scope of the invention thereto but are merely simple descriptive examples.

For example, expressions such as "in a certain direction", "along a certain direction", "parallel", "orthogonal", "center", "concentric", or "coaxial" representing relative or absolute disposition not only represent such disposition in a strict sense but also represent a state of relative displacement with allowance or with an angle or a distance to an extent in which the same function is obtained.

For example, expressions such as "identical", "equal", and "homogeneous" representing a state of equality between objects not only represent a state of equality in a strict sense but also represent a state where allowance or a difference to an extent in which the same function is obtained is present.

For example, expressions representing shapes such as a quadrangular shape and a cylindrical shape not only represent shapes such as a quadrangular shape and a cylindrical shape in a geometrically strict sense but also represent shapes including a rough portion, a chamfered portion, and the like within a scope in which the same effect is obtained.

Meanwhile, expressions such as "provided with", "furnished with", "equipped with", "including", or "having" one constituent are not exclusive expressions that exclude presence of other constituents.

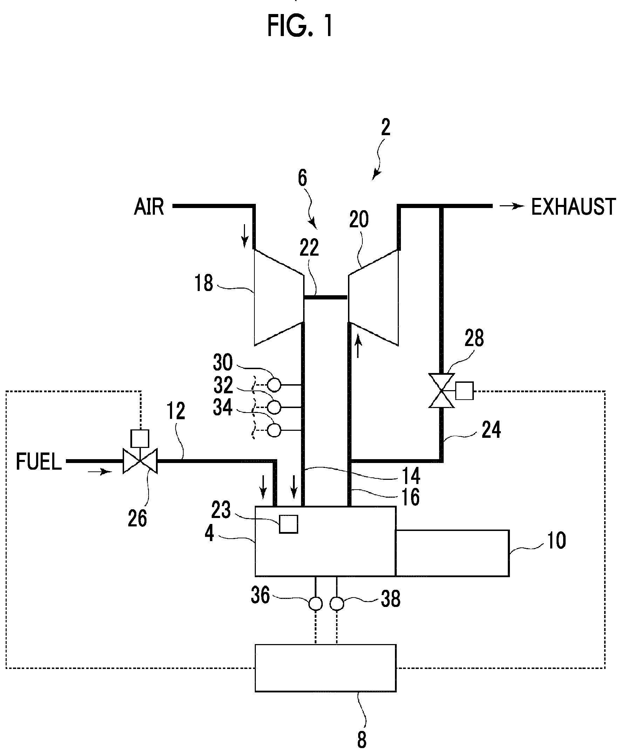

Fig. 1 is a schematic diagram illustrating a configuration of an engine system 2 according to one embodiment.

The engine system 2 illustrated in Fig. 1 is provided with an engine 4, a turbocharger 6 that pressurizes charge air of the engine 4, and an engine control device 8 that controls the engine 4. In the illustrated example, the engine 4 is an engine with a turbocharger for power generation, and the engine system 2 is provided with a generator 10 that is driven to generate power by the engine 4.

In addition, the engine system 2 is provided with a fuel supply pipe 12 for supplying fuel to the engine 4, an intake manifold 14 connected to an intake side of the engine 4, and an exhaust manifold 16 connected to an exhaust side of the engine 4.

The turbocharger 6 includes a centrifugal compressor 18 provided in the intake manifold 14 and an exhaust turbine 20 provided in the exhaust manifold 16. The compressor 18 and the exhaust turbine 20 are connected through a rotating shaft 22 and are configured to rotate as a single body. In a case where the exhaust turbine 20 is driven by exhaust of the engine 4 flowing through the exhaust manifold 16, the compressor 18 pressurizes the charge air flowing through the intake manifold 14 and supplies the pressurized charge air to the engine 4 using a drive force that is transmitted from the exhaust turbine 20 through the rotating shaft 22.

A waste gate pipe 24 that bypasses the exhaust turbine 20 is provided in the exhaust manifold 16. A waste gate valve 28 that can adjust a flow rate of the exhaust flowing through the waste gate pipe 24 is provided in the waste gate pipe 24. In addition, a flow regulation valve 26 is provided in the fuel supply pipe 12.

The engine control device 8 is configured to control a fuel amount to be supplied to the engine 4 from the fuel supply pipe 12 by adjusting an opening degree of the flow regulation valve 26 and to control the charge air amount to be supplied to the engine 4 from the intake manifold 14 by adjusting an opening degree of the waste gate valve 28.

In the illustrated example, the engine system 2 is provided with a charge air pressure sensor 30 that measures a charge air pressure Ps which is a pressure of the charge air of the engine 4, a charge air temperature sensor 32 that measures a charge air temperature Ts which is a temperature of the charge air of the engine 4, and a charge air flow meter 34 that measures charge air amount Ga of the engine 4, at positions between the compressor 18 and the engine 4 in the intake manifold 14. In addition, the engine system 2 is provided with an engine speed sensor 36 that measures a rotation speed Ne of the engine 4, and a load sensor 38 that measures a load L of the engine 4 (a first parameter related to an operation state of the engine 4). In the configuration illustrated in Fig. 1, the load sensor 38 may measure the load L of the engine 4 based on output of the generator 10.

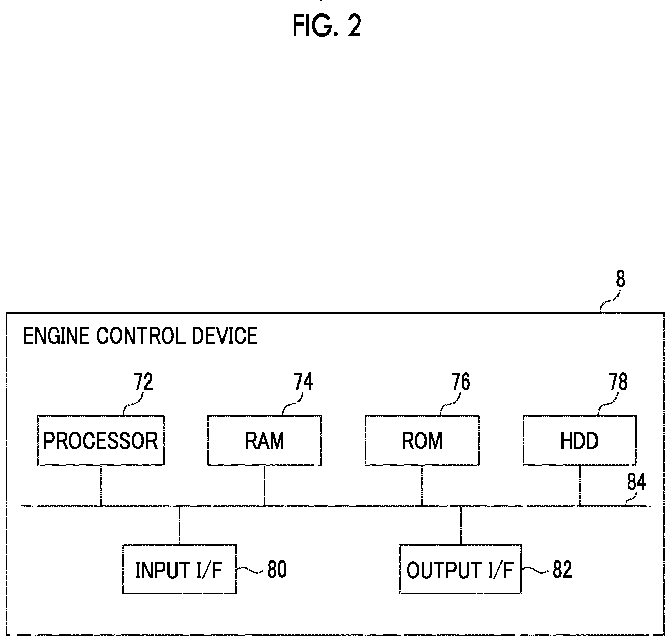

Fig. 2 is a diagram illustrating an example of a hardware configuration of the engine control device 8 illustrated in Fig. 1.

As illustrated in Fig. 2, the engine control device 8 is configured using a computer including, for example, a processor 72, a random access memory (RAM) 74, a read only memory (ROM) 76, a hard disk drive (HDD) 78, an input I/F 80, and an output I/F 82 that are connected to each other through a bus 84. The hardware configuration of the engine control device 8 is not limited to the above and may be configured with a combination of a control circuit and a storage device. In addition, the engine control device 8 is configured by executing a program for implementing each function of the engine control device 8 via the computer. Functions of each unit in the engine control device 8 described below are implemented by loading the program stored in the ROM 76 into the RAM 74 and executing the program via the processor 72 and reading and writing data in the RAM 74 and in the ROM 76.

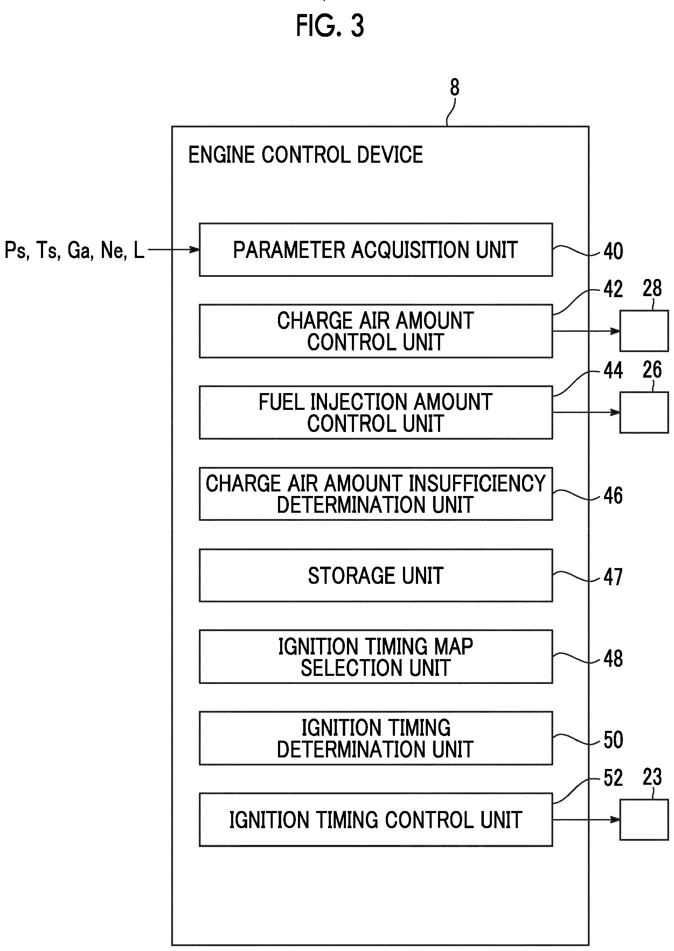

Fig. 3 is a diagram illustrating an example of a functional configuration of the engine control device illustrated in Figs. 1 and 2.

The engine control device 8 illustrated in Fig. 3 includes a parameter acquisition unit 40, a charge air amount control unit 42, a fuel injection amount control unit 44, a charge air amount insufficiency determination unit 46, a storage unit 47, an ignition timing map selection unit 48, an ignition timing determination unit 50, and an ignition timing control unit 52.

The parameter acquisition unit 40 acquires each of the charge air pressure Ps measured by the charge air pressure sensor 30, the charge air temperature Ts measured by the charge air temperature sensor 32, the charge air amount Ga of the engine 4 measured by the charge air flow meter 34, the rotation speed Ne of the engine 4 measured by the engine speed sensor 36, and the load L of the engine 4 measured by the load sensor 38 from each sensor.

The charge air amount control unit 42 controls the charge air amount of the engine 4 by setting a required air amount Sa of the engine 4 based on the charge air pressure Ps, the charge air temperature Ts, the engine speed Ne, and the load L of the engine 4 acquired by the parameter acquisition unit 40 and controlling the opening degree of the waste gate valve 28 based on the set required air amount Sa. The required air amount of the engine 4 means a target value of the charge air amount of the engine 4.

The fuel injection amount control unit 44 controls a fuel injection amount of the engine 4 by controlling the opening degree of the flow regulation valve 26 based on the engine speed Ne and the load L of the engine 4 acquired by the parameter acquisition unit 40.

The charge air amount insufficiency determination unit 46 is configured to determine whether or not insufficiency of the charge air amount that is a state where the charge air amount Ga of the engine 4 is insufficient with respect to the required air amount Sa of the engine 4 has occurred.

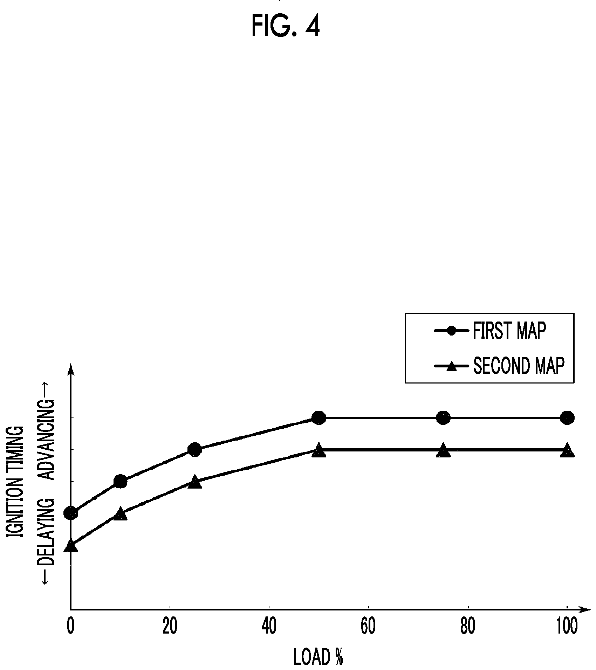

The storage unit 47 stores a plurality of ignition timing maps Mi indicating a relationship between the load L (first parameter) of the engine 4 and an ignition timing Ti during a combustion cycle of the engine 4. Hereinafter, the ignition timing Ti during the combustion cycle of the engine 4 may be simply referred to as an ignition timing of the engine 4. The plurality of ignition timing maps Mi stored in the storage unit 47 includes, for example, as illustrated in Fig. 4, a first map Mi1 that indicates the relationship between the load L of the engine 4 and the ignition timing Ti during the combustion cycle of the engine 4, and a second map Mi2 that indicates the relationship between the load L of the engine 4 and the ignition timing Ti during the combustion cycle of the engine 4 and in which the ignition timing Ti corresponding to the same load L is set to a retarded side, compared to that in the first map Mi1. That is, in a case where the ignition timing Ti corresponding to each load L in the first map Mi1 is compared with the ignition timing Ti corresponding to each load L in the second map Mi2 under the same load L, the ignition timing Ti corresponding to each load L in the second map Mi2 is set closer to the retarded side than the ignition timing Ti corresponding to each load L in the first map Mi1.

The ignition timing map selection unit 48 selects the ignition timing map Mi corresponding to a determination result of the charge air amount insufficiency determination unit 46 from the plurality of ignition timing maps Mi stored in the storage unit 47. For example, in a case where the insufficiency of the charge air amount is detected by the charge air amount insufficiency determination unit 46 in a state where the first map Mi1 is selected, the ignition timing map selection unit 48 switches the ignition timing map Mi to be selected from the first map Mi1 to the second map Mi2. In addition, for example, in a case where the insufficiency of the charge air amount is not detected anymore by the charge air amount insufficiency determination unit 46 in a state where the second map Mi2 is selected (in a case where the insufficiency of the charge air amount is solved), the ignition timing map selection unit 48 switches the ignition timing map Mi to be selected from the second map Mi2 to the first map Mi1.

The ignition timing determination unit 50 determines the ignition timing Ti of the engine 4 corresponding to the load L of the engine acquired by the parameter acquisition unit 40 based on the load L of the engine acquired by the parameter acquisition unit 40 and on the ignition timing map Mi selected by the ignition timing map selection unit 48.

The ignition timing control unit 52 controls the ignition timing Ti of the engine 4 for an ignition device 23 of the engine 4 based on the ignition timing Ti determined by the ignition timing determination unit 50. In a case where the engine 4 is, for example, a gasoline engine, the ignition device 23 of the engine 4 may be an ignition plug for performing spark ignition. In this case, the ignition timing Ti is a timing of spark ignition performed by the ignition plug. In addition, in a case where the engine 4 is, for example, a diesel engine, the ignition device 23 of the engine 4 may be a fuel injection device that injects diesel fuel. In this case, the ignition timing Ti may be an injection timing of the diesel fuel for the fuel injection device. In addition, in a case where the engine 4 is, for example, a gas engine, the ignition device 23 of the engine 4 may be ignition plug for performing spark ignition or a fuel injection device for performing pilot ignition by injecting pilot fuel (for example, diesel oil). In this case, the ignition timing Ti may be the timing of spark ignition performed by the ignition plug or an injection timing of the pilot fuel for the fuel injection device.

In addition, in a case where the charge air amount insufficiency determination unit 46 determines that the insufficiency of the charge air amount has occurred, the ignition timing control unit 52 may shift a retard limit, which is a limit of the ignition timing Ti on the retarded side, further to the retarded side. By shifting the retard limit to the retarded side without causing a misfire and the like in a case where it is determined that the insufficiency of the charge air amount has occurred, the insufficiency of the charge air amount can be improved, and occurrence of knocking can be effectively suppressed.

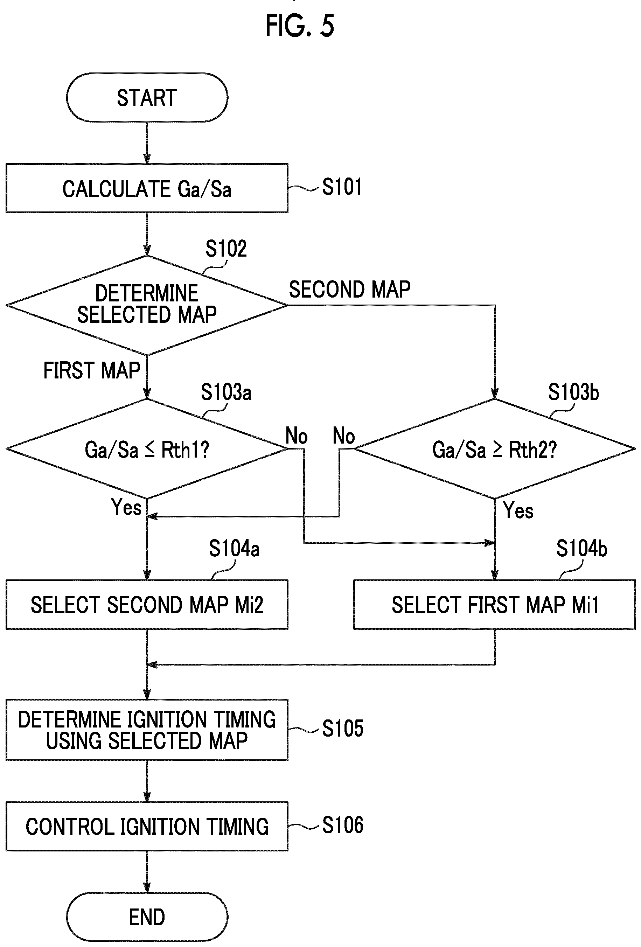

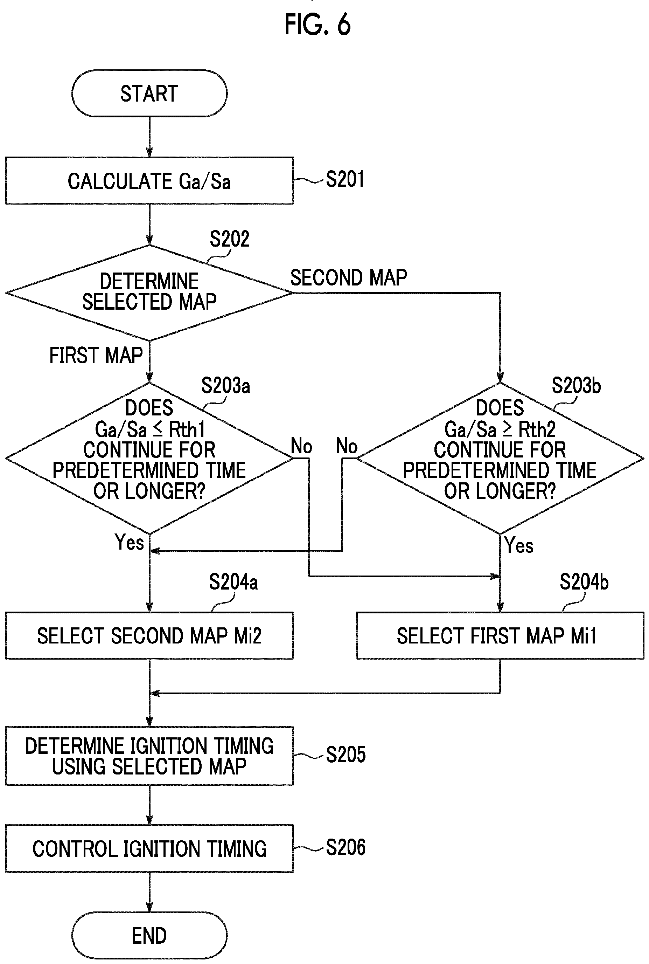

Here, several examples of a method of selecting the ignition timing map Mi via the ignition timing map selection unit 48 will be described using Figs. 5 and 6. Fig. 5 is a flowchart illustrating an example of the method of selecting the ignition timing map Mi via the ignition timing map selection unit 48. Fig. 6 is a flowchart illustrating another example of the method of selecting the ignition timing map Mi via the ignition timing map selection unit 48.

In the example illustrated in Fig. 5, in S101, the charge air amount insufficiency determination unit 46 calculates a ratio Ga/Sa of the charge air amount Ga (a measurement value of the charge air amount) of the engine 4 measured by the charge air flow meter 34 to the required air amount Sa of the engine 4 set by the charge air amount control unit 42. In S102, whether the current state of the ignition timing map selection unit 48 is a state where the first map Mi1 is selected or a state where the second map Mi2 is selected is determined. In a case where the current state of the ignition timing map selection unit 48 is the state where the first map Mi1 is selected, a transition is made to S103a. In a case where the current state of the ignition timing map selection unit 48 is the state where the second map Mi2 is selected, a transition is made to S103b.

In S103a, the charge air amount insufficiency determination unit 46 determines whether or not the ratio Ga/Sa calculated in S101 is less than or equal to a threshold value Rth1 (first threshold value). In a case where the ratio Ga/Sa is less than or equal to the threshold value Rth1, the charge air amount insufficiency determination unit 46 determines that the insufficiency of the charge air amount has occurred, and the ignition timing map selection unit 48 selects the second map Mi2 in S104a. That is, in S104a, the ignition timing map selection unit 48 switches the ignition timing map Mi to be selected from the first map Mi1 to the second map Mi2.

In S103a, in a case where the ratio Ga/Sa calculated in S101 is not less than or equal to the threshold value Rth1, the charge air amount insufficiency determination unit 46 determines that the insufficiency of the charge air amount has not occurred, and the ignition timing map selection unit 48 then selects the first map Mi1 in S104b.

In S103b, the charge air amount insufficiency determination unit 46 determines whether or not the ratio Ga/Sa calculated in S101 is greater than or equal to a threshold value Rth2 (second threshold value). In a case where the ratio Ga/Sa is greater than or equal to the threshold value Rth2, the charge air amount insufficiency determination unit 46 determines that the insufficiency of the charge air amount has not occurred (the insufficiency of the charge air amount is solved), and the ignition timing map selection unit 48 selects the first map Mi1 in S104b. That is, in S104b, the ignition timing map selection unit 48 switches the ignition timing map Mi to be selected from the second map Mi2 to the first map Mi1. In the example illustrated in Fig. 5, the threshold value Rth2 is a value greater than the threshold value Rth1, and Rth1 may be, for example, a value less than or equal to 950 of Rth2.

In S103b, in a case where the ratio Ga/Sa calculated in S101 is not greater than or equal to the threshold value Rth2, the charge air amount insufficiency determination unit 46 determines that the insufficiency of the charge air amount has occurred (the insufficiency of the charge air amount is not solved), and the ignition timing map selection unit 48 then selects the second map Mi2 in S104a.

In S105, the ignition timing determination unit 50 determines the ignition timing Ti during the combustion cycle of the engine 4 using the ignition timing map Mi (in the illustrated example, the first map Mi1 or the second map Mi2) selected in S104a or in S104b by the ignition timing map selection unit 48. More specifically, the ignition timing determination unit 50 determines the ignition timing Ti of the engine 4 corresponding to the load L of the engine 4 acquired by the parameter acquisition unit 40 based on the load L of the engine 4 acquired by the parameter acquisition unit 40 and on the ignition timing map Mi selected in S104a or in S104b by the ignition timing map selection unit 48. In S106, the ignition timing control unit 52 controls the ignition timing Ti of the engine 4 for the ignition device 23 of the engine 4 in the above manner based on the ignition timing Ti determined in S105.

In the example illustrated in Fig. 6, in S201, the ratio Ga/Sa of the charge air amount Ga of the engine 4 measured by the charge air flow meter 34 to the required air amount Sa of the engine 4 set by the charge air amount control unit 42 is calculated. In S202, whether the current state of the ignition timing map selection unit 48 is the state where the first map Mi1 is selected or the state where the second map Mi2 is selected is determined. In a case where the current state of the ignition timing map selection unit 48 is the state where the first map Mi1 is selected, a transition is made to S203a. In a case where the current state of the ignition timing map selection unit 48 is the state where the second map Mi2 is selected, a transition is made to S203b.

In S203a, the charge air amount insufficiency determination unit 46 determines whether or not a state where the ratio Ga/Sa calculated in S201 is less than or equal to the threshold value Rth1 continues for a predetermined time set in advance or longer. In a case where the state where the ratio Ga/Sa is less than or equal to the threshold value Rth1 continues for the predetermined time set in advance or longer, the charge air amount insufficiency determination unit 46 determines that the insufficiency of the charge air amount has occurred, and the ignition timing map selection unit 48 selects the second map Mi2 in S204a. That is, in S204a, the ignition timing map selection unit 48 switches the ignition timing map Mi to be selected from the first map Mi1 to the second map Mi2.

In S203a, in a case where the state where the ratio Ga/Sa calculated in S201 is less than or equal to the threshold value Rth1 does not continue for the predetermined time set in advance or longer (includes a case where the ratio Ga/Sa is greater than the threshold value Rth1), the charge air amount insufficiency determination unit 46 determines that the insufficiency of the charge air amount has not occurred, and the ignition timing map selection unit 48 then selects the first map Mi1 in S204b.

In S203b, the charge air amount insufficiency determination unit 46 determines whether or not a state where the ratio Ga/Sa calculated in S201 is greater than or equal to the threshold value Rth2 continues for a predetermined time set in advance or longer. In a case where the state where the ratio Ga/Sa is greater than or equal to the threshold value Rth2 continues for the predetermined time set in advance or longer, the charge air amount insufficiency determination unit 46 determines that the insufficiency of the charge air amount has not occurred (the insufficiency of the charge air amount is solved), and the ignition timing map selection unit 48 selects the first map Mi1 in S204b. That is, in S204b, the ignition timing map selection unit 48 switches the ignition timing map to be selected from the second map Mi2 to the first map Mi1. In the example illustrated in Fig. 6, the threshold value Rth2 is a value greater than the threshold value Rth1, and Rth1 may be, for example, a value less than or equal to 950 of Rth2.

In S203b, in a case where the state where the ratio Ga/Sa calculated in S201 is greater than or equal to the threshold value Rth2 does not continue for the predetermined time set in advance or longer, the charge air amount insufficiency determination unit 46 determines that the insufficiency of the charge air amount has occurred (the insufficiency of the charge air amount is not solved), and the ignition timing map selection unit 48 then selects the second map Mi2 in S204a.

In S205, the ignition timing determination unit 50 determines the ignition timing Ti during the combustion cycle of the engine 4 using the ignition timing map Mi (in the illustrated example, the first map Mi1 or the second map Mi2) selected in S204a or in S204b by the ignition timing map selection unit 48. More specifically, the ignition timing determination unit 50 determines the ignition timing Ti of the engine 4 corresponding to the load L of the engine 4 acquired by the parameter acquisition unit 40 based on the load L of the engine 4 acquired by the parameter acquisition unit 40 and on the ignition timing map Mi selected in S204a or in S204b by the ignition timing map selection unit 48. In S206, the ignition timing control unit 52 controls the ignition timing Ti of the engine 4 for the ignition device 23 of the engine 4 based on the ignition timing Ti determined in S205, as described above.

Here, an effect obtained by the engine control device 8 described using Figs. 1 to 6 will be described.

According to the engine control device 8, the ignition timing Ti of the engine 4 is determined and controlled using the ignition timing map Mi selected in accordance with the determination result of the charge air amount insufficiency determination unit 46. Thus, the insufficiency of the charge air amount can be quickly improved using the ignition timing map in which the determination result of the insufficiency of the charge air amount of the engine 4 is taken into consideration, compared to that in the method of PTL 1 (the method of performing the retarding control of the ignition timing of the ignition device stepwise in a case where it is determined that the charge air amount of the engine is insufficient).

For example, in a case where the charge air amount insufficiency determination unit 46 determines that the insufficiency of the charge air amount has occurred in the state where the first map Mi1 is selected (for example, in the example illustrated in Fig. 5, in a case where the ratio Ga/Sa of the measurement value Ga of the charge air amount to the required air amount Sa of the engine 4 is less than or equal to the threshold value Rth1), the ignition timing Ti of the engine 4 is changed to the retarded side based on the second map Mi2 by switching the ignition timing map Mi to be selected from the first map Mi1 to the second map Mi2. Accordingly, thermal efficiency of the engine 4 is decreased, and this leads to an increase in exhaust energy of the engine 4 and to an increase in drive energy of the turbocharger 6. Thus, the insufficiency of the charge air amount can be quickly improved. In addition, by changing the ignition timing Ti of the engine 4 to the retarded side, a combustion speed of the engine 4 is decreased, and occurrence of knocking can be suppressed. In addition, by storing the ignition timing map Mi having a low risk of a misfire in the storage unit 47 in advance and selecting the ignition timing map Mi, occurrence of a misfire and the like caused by excessive retarding can be suppressed.

In addition, in the example illustrated in Fig. 5, in a case where the ratio Ga/Sa of the charge air amount Ga acquired by the parameter acquisition unit 40 to the required air amount Sa of the engine 4 is greater than or equal to the threshold value Rth2 which is greater than the threshold value Rth1, it is determined that the insufficiency of the charge air amount has not occurred (the insufficiency of the charge air amount is solved), and the ignition timing map Mi to be selected is switched from the second map Mi2 to the first map Mi1. By doing so, the ignition timing of the engine 4 is changed to an advancing side based on the first map Mi1. Accordingly, the thermal efficiency of the engine 4 is increased, and this leads to a decrease in the exhaust energy of the engine 4 and to a decrease in the drive energy of the turbocharger 6. Thus, in the example illustrated in Fig. 5, both of quick improvement of the insufficiency of the charge air amount and suppression of a decrease in the thermal efficiency of the engine 4 can be established. In addition, by setting the threshold value Rth2 to a value greater than the threshold value Rth1 to provide hysteresis to the threshold values, an excessive increase in a frequency of change of the ignition timing map Mi in a case where the ratio Ga/Sa stays near the threshold values is suppressed, and hunting of the ignition timing Ti is suppressed. Accordingly, an operation of the engine 4 can be stabilized.

In addition, in the example illustrated in Fig. 6, the ignition timing map Mi is also not switched until the state where the ratio Ga/Sa is less than or equal to the threshold value Rth1 or the state where the ratio Ga/Sa is greater than or equal to the threshold value Rth2 continues for the predetermined time. Thus, an excessive increase in the frequency of change of the ignition timing map Mi in a case where the ratio Ga/Sa stays near the threshold values is suppressed, and hunting of the ignition timing Ti is suppressed. Accordingly, the operation of the engine 4 can be stabilized.

While the charge air amount insufficiency determination unit 46 determines whether or not the insufficiency of the charge air amount of the engine 4 has occurred based on the ratio Ga/Sa of the charge air amount Ga (the measurement value of the charge air amount) of the engine 4 measured by the charge air flow meter 34 to the required air amount Sa of the engine 4 set by the charge air amount control unit 42 in the embodiment, the charge air amount insufficiency determination unit 46 may determine whether or not the insufficiency of the charge air amount of the engine 4 has occurred based on the ratio Ga/Sa of an estimation value of the charge air amount Ga of the engine 4 to the required air amount Sa set by the charge air amount control unit 42.

In this case, for example, the charge air amount insufficiency determination unit 46 may calculate intake density Da using Expression (a) below and calculate the estimation value of the charge air amount Ga of the engine based on the calculated charge air density Da using Expression (b) below.

$$Da = D0 \times \frac{Ps}{0.1013} \times \frac{273.15}{Ts + 273.15} \qquad (a)$$

$$Ga = \eta v \times Da \times N \times D \times \frac{Ne}{120} \times 3600 \qquad (b)$$

Here, Da is the charge air density (kg/m$^3$), D0 is air density (kg/m$^3$) ($\approx$ 1.293) in a standard state (0°C and 1 atmosphere = 0.1013 MPa_abs), Ps is the charge air pressure (MPa_abs), and Ts is the charge air temperature (°C). In addition, Ga is the charge air amount (kg/h) of the engine 4, Ne is the engine speed (min$^{-1}$) of the engine 4, N is the number of cylinders of the engine 4, D is a cylinder capacity (m$^3$) per cylinder, and $\eta v$ is volumetric efficiency (a ratio of air trapped in the cylinder) of the engine 4.

In addition, the estimation value of the charge air amount Ga of the engine 4 used for determining the insufficiency of the charge air amount of the engine 4 may be estimated based on properties of the exhaust of the engine 4. For example, in a case where the engine system 2 is provided with a concentration sensor (not illustrated) that measures an $O_2$ concentration in the exhaust of the exhaust manifold 16, the estimation value of the charge air amount Ga of the engine 4 may be calculated based on a measurement value of the $O_2$ concentration in the exhaust and on a measurement value of a fuel flow rate.

In several embodiments, in a case where the engine control device 8 is configured to control the charge air amount of the engine 4 by controlling the opening degree of the waste gate valve 28 as described above, the charge air amount insufficiency determination unit 46 may determine that the insufficiency of the charge air amount has occurred in a case where the opening degree of the waste gate valve 28 is in a fully closed position. In this case, the charge air amount insufficiency determination unit 46 may determine that the insufficiency of the charge air amount has not occurred in a case where the opening degree of the waste gate valve 28 is not in the fully closed position.

In such a control of the charge air amount, the charge air amount of the engine 4 is increased as the opening degree of the waste gate valve 28 is decreased. Thus, in a case where the opening degree of the waste gate valve 28 is in the fully closed position, since the charge air amount of the engine 4 cannot be further increased by controlling the waste gate valve 28, it can be determined that the insufficiency of the charge air amount of the engine 4 has occurred. Even in this case, the same manner as the embodiment described using Figs. 5 and 6 and the like may be applied. The ignition timing may be determined using the second map Mi2 in a case where the charge air amount insufficiency determination unit 46 determines that the insufficiency of the charge air amount of the engine 4 has occurred, and the ignition timing may be determined using the first map Mi1 in a case where the charge air amount insufficiency determination unit 46 determines that the insufficiency of the charge air amount of the engine 4 has not occurred.

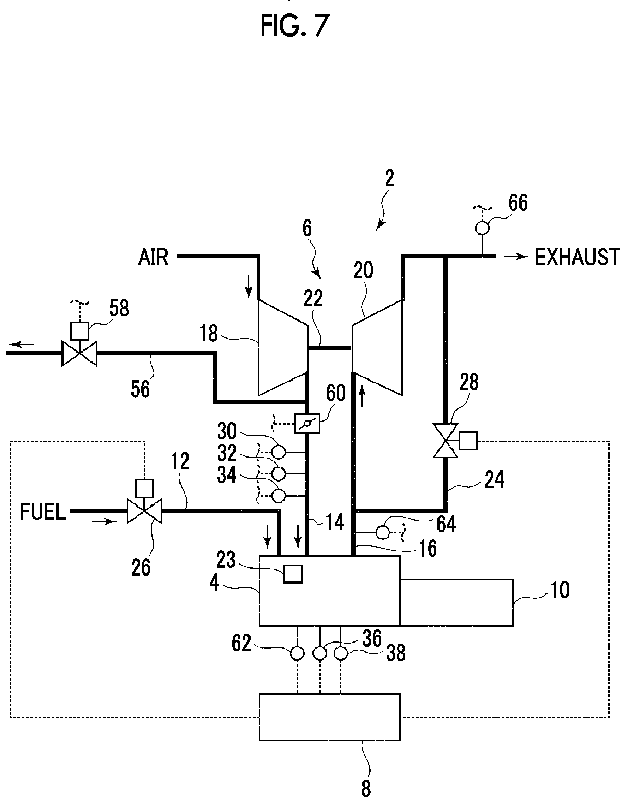

In several embodiments, for example, as illustrated in Fig. 7, a charge air bypass pipe 56 for releasing the intake of the engine 4 from a space between the compressor 18 of the turbocharger 6 and the engine 4 may be connected to the intake manifold 14 connected to the intake side of the engine 4. A charge air bypass valve 58 is provided in the charge air bypass pipe 56. In this configuration, in a case where the engine control device 8 is configured to control the charge air amount of the engine 4 by controlling an opening degree of the charge air bypass valve 58, the charge air amount insufficiency determination unit 46 may determine that the insufficiency of the charge air amount has occurred in a case where the opening degree of the charge air bypass valve 58 is in a fully closed position. In this case, the charge air amount insufficiency determination unit 46 may determine that the insufficiency of the charge air amount has not occurred in a case where the opening degree of the charge air bypass valve 58 is not in the fully closed position.

In such a control of the charge air amount, the charge air amount of the engine 4 is increased as the opening degree of the charge air bypass valve 58 is decreased. Thus, in a case where the opening degree of the charge air bypass valve 58 is in the fully closed position, the charge air amount of the engine 4 cannot be further increased by controlling the charge air bypass valve 58, and it can be determined that the insufficiency of the charge air amount of the engine 4 has occurred. Even in this case, the same manner as the embodiment described using Figs. 5 and 6 and the like may be applied. The ignition timing may be determined using the second map Mi2 in a case where the charge air amount insufficiency determination unit 46 determines that the insufficiency of the charge air amount of the engine 4 has occurred, and the ignition timing may be determined using the first map Mi1 in a case where the charge air amount insufficiency determination unit 46 determines that the insufficiency of the charge air amount of the engine 4 has not occurred.

In several embodiments, for example, as illustrated in Fig. 7, an intake throttle valve 60 may be provided in the intake manifold 14 connected to the intake side of the engine 4. In this configuration, in a case where the engine control device 8 is configured to control the charge air amount of the engine 4 by controlling an opening degree of the intake throttle valve 60, the charge air amount insufficiency determination unit 46 may determine that the insufficiency of the charge air amount has occurred in a case where the opening degree of the intake throttle valve 60 is in a fully open position. In this case, the charge air amount insufficiency determination unit 46 may determine that the insufficiency of the charge air amount has not occurred in a case where the opening degree of the intake throttle valve 60 is not in the fully open position.

In such a control of the charge air amount, the charge air amount of the engine 4 is increased as the opening degree of the intake throttle valve 60 is increased. Thus, in a case where the opening degree of the intake throttle valve 60 is in the fully open position, the charge air amount of the engine 4 cannot be further increased by controlling the intake throttle valve 60, and it can be determined that the insufficiency of the charge air amount of the engine 4 has occurred. Even in this case, the same manner as the embodiment described using Figs. 5 and 6 and the like may be applied. The ignition timing may be determined using the second map Mi2 in a case where the charge air amount insufficiency determination unit 46 determines that the insufficiency of the charge air amount of the engine 4 has occurred, and the ignition timing may be determined using the first map Mi1 in a case where the charge air amount insufficiency determination unit 46 determines that the insufficiency of the charge air amount of the engine 4 has not occurred.

In addition, the charge air amount insufficiency determination unit 46 may determine that the insufficiency of the charge air amount has occurred in a case where the opening degree of the intake throttle valve 60 is extremely high with respect to the operation state of the engine 4, that is, in a case where the opening degree of the intake throttle valve 60 is greater than a reference value of the opening degree of the intake throttle valve 60 corresponding to the operation state of the engine 4 (for example, the rotation speed and output of the engine 4 and an outside air condition of the engine 4). In addition, the charge air amount insufficiency determination unit 46 may determine that the insufficiency of the charge air amount has not occurred in a case where the opening degree of the intake throttle valve 60 is not greater than the reference value of the opening degree of the intake throttle valve 60 corresponding to the operation state of the engine 4 (for example, the engine speed, the output, and the outside air condition of the engine 4). Even in this case, the same manner as the embodiment described using Figs. 5 and 6 and the like may be applied. The ignition timing may be determined using the second map Mi2 in a case where the charge air amount insufficiency determination unit 46 determines that the insufficiency of the charge air amount of the engine 4 has occurred, and the ignition timing may be determined using the first map Mi1 in a case where the charge air amount insufficiency determination unit 46 determines that the insufficiency of the charge air amount of the engine 4 has not occurred.

In several embodiments, for example, in the engine system 2 illustrated in Fig. 1 or 7, the engine control device 8 may be configured to execute a retarding control of retarding the ignition timing of the engine 4 with respect to a reference timing in order to avoid abnormal combustion of the engine 4. In this case, the charge air amount insufficiency determination unit 46 may determine that the insufficiency of the charge air amount has occurred in a case where the ignition timing of the engine 4 (particularly, ignition timings of a plurality of cylinders) is maintained at an ignition timing corresponding to a limit value of an amount of retarding from the reference timing for a predetermined time or longer. In addition, the charge air amount insufficiency determination unit 46 may determine that the insufficiency of the charge air amount has not occurred in a case where the ignition timing of the engine 4 is not maintained at the ignition timing corresponding to the limit value of the amount of retarding from the reference timing for the predetermined time or longer. Even in this case, the same manner as the embodiment described using Figs. 5 and 6 and the like may be applied. The ignition timing may be determined using the second map Mi2 in a case where the charge air amount insufficiency determination unit 46 determines that the insufficiency of the charge air amount of the engine 4 has occurred, and the ignition timing may be determined using the first map Mi1 in a case where the charge air amount insufficiency determination unit 46 determines that the insufficiency of the charge air amount of the engine 4 has not occurred.

In several embodiments, for example, as illustrated in Fig. 7, a knocking sensor 62 for detecting knocking of the engine 4 may be provided in the engine 4. The knocking sensor 62 may be, for example, an acceleration sensor attached to the engine 4 or a cylinder pressure sensor that measures a cylinder pressure of the engine 4.

In this case, the charge air amount insufficiency determination unit 46 may determine that the insufficiency of the charge air amount has occurred in a case where knocking is detected using a signal from the knocking sensor 62, or determine that the insufficiency of the charge air amount has not occurred in a case where knocking is not detected using the signal from the knocking sensor 62. Even in this case, the same manner as the embodiment described using Figs. 5 and 6 and the like may be applied. The ignition timing may be determined using the second map Mi2 in a case where the charge air amount insufficiency determination unit 46 determines that the insufficiency of the charge air amount of the engine 4 has occurred, and the ignition timing may be determined using the first map Mi1 in a case where the charge air amount insufficiency determination unit 46 determines that the insufficiency of the charge air amount of the engine 4 has not occurred.

In several embodiments, for example, as illustrated in Fig. 7, an exhaust temperature sensor 64 for measuring an exhaust temperature of the engine 4 may be provided in the exhaust manifold 16 connected to the exhaust side of the engine 4. In the configuration illustrated in Fig. 7, the exhaust temperature sensor 64 is provided at a position between the engine 4 and the exhaust turbine 20 in the exhaust manifold 16.

In this case, the charge air amount insufficiency determination unit 46 may determine that the insufficiency of the charge air amount has occurred in a case where the exhaust temperature measured by the exhaust temperature sensor 64 is high with respect to the fuel flow rate (fuel injection amount) of the engine 4, that is, in a case where the exhaust temperature measured by the exhaust temperature sensor 64 is higher than a reference value of the exhaust temperature corresponding to the fuel flow rate of the engine 4. In addition, the charge air amount insufficiency determination unit 46 may determine that the insufficiency of the charge air amount has not occurred in a case where the exhaust temperature measured by the exhaust temperature sensor 64 is not higher than the reference value of the exhaust temperature corresponding to the fuel flow rate of the engine 4. Even in this case, the same manner as the embodiment described using Figs. 5 and 6 and the like may be applied. The ignition timing may be determined using the second map Mi2 in a case where the charge air amount insufficiency determination unit 46 determines that the insufficiency of the charge air amount of the engine 4 has occurred, and the ignition timing may be determined using the first map Mi1 in a case where the charge air amount insufficiency determination unit 46 determines that the insufficiency of the charge air amount of the engine 4 has not occurred.

In several embodiments, for example, as illustrated in Fig. 7, a concentration sensor 66 for measuring a NOx concentration or an $O_2$ concentration in the exhaust of the engine 4 may be provided in the exhaust manifold 16 connected to the exhaust side of the engine 4.

In this case, the charge air amount insufficiency determination unit 46 may determine that the insufficiency of the charge air amount has occurred in a case where the NOx concentration detected by the concentration sensor 66 is higher than a reference concentration corresponding to the operation state of the engine 4 (for example, the engine speed and the output of the engine 4 and the outside air condition of the engine 4) or in a case where the $O_2$ concentration detected by the concentration sensor 66 is lower than a reference concentration corresponding to the operation state of the engine 4 (for example, the engine speed and the output of the engine 4 and the outside air condition of the engine 4). In addition, the charge air amount insufficiency determination unit 46 may determine that the insufficiency of the charge air amount has not occurred in a case where the NOx concentration detected by the concentration sensor 66 is not higher than the reference concentration corresponding to the operation state of the engine 4 (for example, the engine speed and the output of the engine 4 and the outside air condition of the engine 4) or in a case where the $O_2$ concentration detected by the concentration sensor 66 is not lower than the reference concentration corresponding to the operation state of the engine 4 (for example, the engine speed and the output of the engine 4 and the outside air condition of the engine 4). Even in this case, the same manner as the embodiment described using Figs. 5 and 6 and the like may be applied. The ignition timing may be determined using the second map Mi2 in a case where the charge air amount insufficiency determination unit 46 determines that the insufficiency of the charge air amount of the engine 4 has occurred, and the ignition timing may be determined using the first map Mi1 in a case where the charge air amount insufficiency determination unit 46 determines that the insufficiency of the charge air amount of the engine 4 has not occurred.

As described using Fig. 7 and the like, by determining whether or not the insufficiency of the charge air amount of the engine 4 has occurred based on the ratio Ga/Sa of the estimation value of the charge air amount Ga of the engine 4 to the required air amount Sa set by the charge air amount control unit 42, the insufficiency of the charge air amount can be determined even in a case where the charge air flow meter 34 is not provided. Thus, the insufficiency of the charge air amount can be quickly improved while addition of an item of the engine system 2 to be monitored is suppressed.

The present disclosure is not limited to the embodiments and includes embodiments obtained by modifying the embodiments and embodiments obtained by appropriately combining the embodiments.

For example, while the load of the engine 4 is illustrated as an example of the first parameter of the ignition timing map in the several embodiments, the first parameter of the ignition timing map is not limited to the load of the engine 4 and may be the engine speed, the charge air temperature, a coolant temperature, and fuel properties of the engine 4, whether or not the engine control device 8 malfunctions, an elapsed time from starting of the engine 4, or other external triggers and the like.

In addition, for example, the charge air amount insufficiency determination unit 46 may comprehensively determine whether or not the insufficiency of the charge air amount has occurred from a combination and the like of a plurality of items used for determining the insufficiency of the charge air amount in the several embodiments.

In addition, for example, while the ignition timing map selection unit 48 selects the ignition timing map corresponding to the determination result of the charge air amount insufficiency determination unit 46 from the first map Mi1 and the second map Mi2 as the plurality of ignition timing maps Mi in the several embodiments, the ignition timing map selection unit 48 may select the ignition timing map corresponding to the determination result of the charge air amount insufficiency determination unit 46 from three or more ignition timing maps as the plurality of ignition timing maps Mi.

In addition, in a case where the engine 4 is, for example, a diesel engine that performs multi-stage injection of fuel (or a gas engine or a gasoline engine that performs direct fuel injection into a cylinder), the ignition timing control unit 52 may increase the number of stages of fuel injection during one combustion cycle of the engine 4 to perform a rear stage of fuel injection (post-injection) after main fuel injection during the one combustion cycle of the engine in a case where the charge air amount insufficiency determination unit 46 determines that the insufficiency of the charge air amount has occurred. In addition, in a case where the engine 4 is, for example, a diesel engine that performs multi-stage injection of fuel (or a gas engine or a gasoline engine that performs direct fuel injection into a cylinder), the ignition timing control unit 52 may increase the fuel injection amount of a rear stage (post-injection amount) out of the fuel injection amount of a front stage and the fuel injection amount of the rear stage during the one combustion cycle of the engine 4 in a case where the charge air amount insufficiency determination unit 46 determines that the insufficiency of the charge air amount has occurred. Accordingly, by changing only the rear stage of fuel injection, the insufficiency of the charge air amount can be improved by increasing the exhaust temperature of the engine without affecting main combustion.

Contents disclosed in each of the embodiments, for example, are perceived as follows.

(1) An engine control device according to at least one embodiment of the present disclosure is an engine control device (for example, the engine control device 8) for controlling an engine (engine 4) with a turbocharger and includes a parameter acquisition unit (for example, the parameter acquisition unit 40) configured to acquire a first parameter (for example, the load L of the engine 4) related to an operation state of the engine, a charge air amount insufficiency determination unit (for example, the charge air amount insufficiency determination unit 46) for determining whether or not insufficiency of charge air amount of the engine has occurred, an ignition timing map selection unit (for example, the ignition timing map selection unit 48) configured to select an ignition timing map corresponding to a determination result of the charge air amount insufficiency determination unit from a plurality of ignition timing maps (for example, the plurality of ignition timing maps Mi) indicating a relationship between the first parameter and an ignition timing of the engine, an ignition timing determination unit (for example, the ignition timing determination unit 50) configured to determine the ignition timing (for example, the ignition timing Ti) of the engine based on the first parameter acquired by the parameter acquisition unit and on the ignition timing map selected by the ignition timing map selection unit, and an ignition timing control unit (for example, the ignition timing control unit 52) configured to control the ignition timing based on the ignition timing determined by the ignition timing determination unit.

According to the engine control device according to (1), the ignition timing of the engine is determined and controlled using the ignition timing map selected in accordance with the determination result of the charge air amount insufficiency determination unit. Thus, the insufficiency of the charge air amount can be quickly improved using the ignition timing map in which the determination result of the insufficiency of the charge air amount of the engine is taken into consideration, compared to that in the method of PTL 1 (the method of performing the retarding control of the ignition timing of the ignition device stepwise in a case where it is determined that the charge air amount of the engine is insufficient).

(2) In several embodiments, in the engine control device according to (1), the plurality of ignition timing maps include at least a first map (for example, the first map Mi1) indicating the relationship between the first parameter and the ignition timing of the engine, and a second map (for example, the second map Mi2) that indicates the relationship between the first parameter and the ignition timing of the engine and in which the ignition timing corresponding to the same first parameter is set to a retarded side compared to the ignition timing in the first map, and the ignition timing map selection unit is configured to, in a case where the charge air amount insufficiency determination unit determines that the insufficiency of the charge air amount has occurred in a state where the first map is selected, switch the ignition timing map to be selected from the first map to the second map.

According to the engine control device according to (2), in a case where the charge air amount insufficiency determination unit determines that the insufficiency of the charge air amount has occurred in the state where the first map is selected, the ignition timing of the engine is changed to the retarded side based on the second map by switching the ignition timing map to be selected from the first map to the second map. Accordingly, thermal efficiency of the engine is decreased, and this leads to an increase in exhaust energy of the engine and to an increase in drive energy of the turbocharger. Thus, the insufficiency of the charge air amount can be quickly improved. In addition, by changing the ignition timing of the engine to the retarded side, a combustion speed of the engine is decreased, and occurrence of knocking can be suppressed. In addition, by selecting the ignition timing map having a low risk of a misfire, occurrence of a misfire and the like caused by excessive retarding can be suppressed.

(3) In several embodiments, in the engine control device according to (2), the parameter acquisition unit is configured to acquire a measurement value or an estimation value of the charge air amount, and in a case where the measurement value or the estimation value of the charge air amount acquired by the parameter acquisition unit is Ga and a required air amount of the engine is Sa, the charge air amount insufficiency determination unit is configured to determine that the insufficiency of the charge air amount has occurred in a case where a ratio Ga/Sa of the measurement value or the estimation value Ga of the charge air amount to the required air amount Sa is less than or equal to a first threshold value (for example, the threshold value Rth1).

According to the engine control device according to (3), in a case where the ratio Ga/Sa of the measurement value or the estimation value Ga of the charge air amount to the required air amount Sa is less than or equal to the first threshold value, the ignition timing of the engine is changed to the retarded side based on the second map by switching the ignition timing map to be selected from the first map to the second map. Accordingly, the thermal efficiency of the engine is decreased, and this leads to an increase in the exhaust energy of the engine and to an increase in the drive energy of the turbocharger. Thus, the insufficiency of the charge air amount can be quickly improved.

(4) In several embodiments, in the engine control device according to (3), the ignition timing map selection unit is configured to, in a case where the ratio Ga/Sa is greater than or equal to a second threshold value (for example, the threshold value Rth2) that is greater than the first threshold value, switch the ignition timing map to be selected from the second map to the first map.

According to the engine control device according to (4), by setting the second threshold value to a value greater than the first threshold value to provide hysteresis to the threshold values, an excessive increase in a frequency of change of the ignition timing map in a case where the ratio Ga/Sa stays near the threshold values is suppressed, and hunting of the ignition timing is suppressed. Accordingly, an operation of the engine can be stabilized.

(5) In several embodiments, in the engine control device according to (3) or (4), the ignition timing map selection unit is configured to, in a case where a state where the ratio Ga/Sa is less than or equal to the first threshold value continues for a predetermined time in the state where the first map is selected, switch the ignition timing map to be selected from the first map to the second map.

According to the engine control device according to (5), in a case where the state where the ratio Ga/Sa is less than or equal to the first threshold value continues for the predetermined time in the state where the first map is selected, the ignition timing map to be selected is switched from the first map to the second map. Thus, an excessive increase in the frequency of change of the ignition timing map in a case where the ratio Ga/Sa stays near the first threshold value is suppressed, and hunting of the ignition timing is suppressed. Accordingly, the operation of the engine can be stabilized.

(6) In several embodiments, in the engine control device according to any one of (1) to (5), a waste gate pipe (for example, the waste gate pipe 24) that bypasses an exhaust turbine of the turbocharger is provided in a exhaust manifold connected to an exhaust side of the engine, and a waste gate valve (for example, the waste gate valve 28) is provided in the waste gate pipe, the engine control device is configured to control the charge air amount of the engine by controlling an opening degree of the waste gate valve, and the charge air amount insufficiency determination unit is configured to determine that the insufficiency of the charge air amount has occurred in a case where the opening degree of the waste gate valve is in a fully closed position.

According to (6), in the case of controlling the charge air amount of the engine by controlling the opening degree of the waste gate valve, the charge air amount of the engine is increased as the opening degree of the waste gate valve is decreased. Thus, in a case where the opening degree of the waste gate valve is in the fully closed position, since the charge air amount of the engine cannot be further increased by controlling the waste gate valve, it can be determined that the insufficiency of the charge air amount of the engine has occurred. Accordingly, the insufficiency of the charge air amount can be quickly improved by selecting the ignition timing map (for example, the second map Mi2) for improving the insufficiency of the charge air amount.

(7) In several embodiments, in the engine control device according to any one of (1) to (6), a charge air bypass pipe (for example, the charge air bypass pipe 56) for releasing charge air of the engine from a space between the turbocharger and the engine is connected to an intake manifold (for example, the intake manifold 14) connected to an intake side of the engine, a charge air bypass valve (for example, the charge air bypass valve 58) is provided in the charge air bypass pipe, the engine control device is configured to control the charge air amount of the engine by controlling an opening degree of the charge air bypass valve, and the charge air amount insufficiency determination unit is configured to determine that the insufficiency of the charge air amount has occurred in a case where the opening degree of the charge air bypass valve is in a fully closed position.

According to (7), in the case of controlling the charge air amount of the engine by controlling the opening degree of the charge air bypass valve, the charge air amount of the engine is increased as the opening degree of the charge air bypass valve is decreased. Thus, in a case where the opening degree of the charge air bypass valve is in the fully closed position, the charge air amount of the engine cannot be further increased by controlling the charge air bypass valve, and it can be determined that the insufficiency of the charge air amount of the engine has occurred. Accordingly, the insufficiency of the charge air amount can be quickly improved by selecting the ignition timing map (for example, the second map Mi2) for improving the insufficiency of the charge air amount.

(8) In several embodiments, in the engine control device according to any one of (1) to (7), an intake throttle valve (for example, the intake throttle valve 60) is provided in an intake manifold connected to an intake side of the engine, the engine control device is configured to control the charge air amount of the engine by controlling an opening degree of the intake throttle valve, and the charge air amount insufficiency determination unit is configured to determine that the insufficiency of the charge air amount has occurred in a case where the opening degree of the intake throttle valve is in a fully open position or in a case where the opening degree of the intake throttle valve is greater than a reference value of the opening degree corresponding to the operation state of the engine.

According to (8), in the case of controlling the charge air amount of the engine by controlling the opening degree of the intake throttle valve, the charge air amount of the engine is increased as the opening degree of the intake throttle valve is increased. Thus, in a case where the opening degree of the intake throttle valve is in the fully open position, the charge air amount of the engine cannot be further increased by controlling the intake throttle valve, and it can be determined that the insufficiency of the charge air amount of the engine has occurred. Alternatively, in a case where the opening degree of the intake throttle valve is greater than the reference value of the opening degree corresponding to the operation state of the engine, it can be determined that the insufficiency of the charge air amount has occurred. Accordingly, the insufficiency of the charge air amount can be quickly improved by selecting the ignition timing map (for example, the second map Mi2) for improving the insufficiency of the charge air amount.

(9) In several embodiments, in the engine control device according to any one of (1) to (8), the engine control device is configured to execute a retarding control of retarding the ignition timing of the engine with respect to a reference timing in order to avoid abnormal combustion of the engine, and the charge air amount insufficiency determination unit is configured to determine that the insufficiency of the charge air amount has occurred in a case where the ignition timing in the retarding control is maintained at an ignition timing corresponding to a limit value of an amount of retarding from the reference timing for a predetermined time or longer.

According to (9), in a case where the ignition timing in the retarding control is maintained at the ignition timing corresponding to the limit value of the amount of retarding from the reference timing for the predetermined time or longer, it can be determined that the insufficiency of the charge air amount of the engine has occurred. Accordingly, the insufficiency of the charge air amount can be quickly improved by selecting the ignition timing map (for example, the second map Mi2) for improving the insufficiency of the charge air amount.

(10) In several embodiments, in the engine control device according to any one of (1) to (9), a knocking sensor (for example, the knocking sensor 62) for detecting knocking of the engine is provided in the engine, and the charge air amount insufficiency determination unit is configured to determine that the insufficiency of the charge air amount has occurred in a case where knocking is detected using a signal from the knocking sensor.

According to (10), in a case where knocking is detected using the signal from the knocking sensor, it can be determined that the insufficiency of the charge air amount of the engine has occurred. Accordingly, the insufficiency of the charge air amount can be quickly improved by selecting the ignition timing map (for example, the second map Mi2) for improving the insufficiency of the charge air amount.

(11) In several embodiments, in the engine control device according to any one of (1) to (10), an exhaust temperature sensor (for example, the exhaust temperature sensor 64) for measuring an exhaust temperature of the engine is provided in an exhaust manifold connected to an exhaust side of the engine, and the charge air amount insufficiency determination unit is configured to determine that the insufficiency of the charge air amount has occurred in a case where the exhaust temperature measured by the exhaust temperature sensor is higher than a reference value of the exhaust temperature corresponding to a fuel flow rate of the engine.

According to (11), in a case where the exhaust temperature measured by the exhaust temperature sensor is higher than the reference value of the exhaust temperature corresponding to the fuel flow rate of the engine (in a case where the exhaust temperature measured by the exhaust temperature sensor is high with respect to the fuel flow rate of the engine), it can be determined that the insufficiency of the charge air amount of the engine has occurred. Accordingly, the insufficiency of the charge air amount can be quickly improved by selecting the ignition timing map (for example, the second map Mi2) for improving the insufficiency of the charge air amount.

(12) In several embodiments, in the engine control device according to any one of (1) to (11), a concentration sensor (for example, the concentration sensor 66) for measuring a NOx concentration or an $O_2$ concentration of exhaust of the engine is provided in an exhaust manifold (for example, the exhaust manifold 16) connected to an exhaust side of the engine, and the charge air amount insufficiency determination unit is configured to determine that the insufficiency of the charge air amount has occurred in a case where the NOx concentration detected by the concentration sensor is higher than a reference concentration corresponding to the operation state of the engine or in a case where the $O_2$ concentration detected by the concentration sensor is lower than a reference concentration corresponding to the operation state of the engine.

According to the engine control device according to (12), in a case where the NOx concentration of the exhaust of the engine measured by the concentration sensor is higher than the reference concentration corresponding to a normal NOx concentration or in a case where the $O_2$ concentration measured by the concentration sensor is lower than the reference concentration corresponding to a normal $O_2$ concentration, it can be determined that the insufficiency of the charge air amount of the engine has occurred. Accordingly, the insufficiency of the charge air amount can be quickly improved by selecting the ignition timing map (for example, the second map Mi2) for improving the insufficiency of the charge air amount.

(13) In several embodiments, in the engine control device according to any one of (1) to (12), the ignition timing control unit is configured to, in a case where the charge air amount insufficiency determination unit determines that the insufficiency of the charge air amount has occurred, shift a retard limit that is a limit of the ignition timing on a retarded side further to the retarded side.

According to the engine control device according to (13), by shifting the retard limit to the retarded side without causing a misfire and the like in a case where it is determined that the insufficiency of the charge air amount has occurred, the insufficiency of the charge air amount can be improved, and occurrence of knocking can be effectively suppressed.

(14) In several embodiments, in the engine control device according to (1), the ignition timing control unit is configured to, in a case where the charge air amount insufficiency determination unit determines that the insufficiency of the charge air amount has occurred, increase the number of stages of injected fuel during one combustion cycle of the engine or increase a fuel injection amount of a rear stage out of a fuel injection amount of a front stage and the fuel injection amount of the rear stage during the one combustion cycle of the engine.

According to the engine control device according to (14), by changing only the rear stage of fuel injection, the insufficiency of the charge air amount can be improved by increasing the exhaust temperature of the engine without affecting main combustion.

(15) An engine system according to one embodiment of the present disclosure includes an engine (for example, the engine 4), a turbocharger (for example, the turbocharger 6), and the engine control device according to any one of (1) to (14).

According to the engine system according to (15), since the engine control device according to any one of (1) to (14) is provided, the insufficiency of the charge air amount can be quickly improved using the ignition timing map in which the determination result of the insufficiency of the charge air amount of the engine is taken into consideration.

Reference Signs List

2: engine system
4: engine
6: turbocharger
8: engine control device
10: generator
12: fuel supply pipe
14: intake manifold
16: exhaust manifold
18: compressor
20: exhaust turbine

20: turbine
22: rotating shaft
23: ignition device
24: waste gate pipe
26: flow regulation valve
28: waste gate valve
30: pressure sensor
32: temperature sensor
34: flow meter
36: engine speed sensor
38: load sensor
40: parameter acquisition unit
42: charge air amount control unit
44: fuel injection amount control unit
46: charge air amount insufficiency determination unit
47: storage unit
48: ignition timing map selection unit
50: ignition timing determination unit
52: ignition timing control unit
56: charge air bypass pipe
58: charge air bypass valve
60: intake throttle valve
62: knocking sensor
64: exhaust temperature sensor
66: concentration sensor
72: processor
74: RAM
76: ROM
78: HDD
80: input I/F
82: output I/F
84: bus

## Claims

1. An engine control device for controlling an engine with a turbocharger, the engine control device comprising:

   a parameter acquisition unit configured to acquire a first parameter related to an operation state of the engine;
   a charge air amount insufficiency determination unit for determining whether or not insufficiency of charge air amount of the engine has occurred;
   an ignition timing map selection unit configured to select an ignition timing map corresponding to a determination result of the charge air amount insufficiency determination unit from a plurality of ignition timing maps indicating a relationship between the first parameter and an ignition timing of the engine;
   an ignition timing determination unit configured to determine the ignition timing of the engine based on the first parameter acquired by the parameter acquisition unit and on the ignition timing map selected by the ignition timing map selection unit; and
   an ignition timing control unit configured to control the ignition timing based on the ignition timing determined by the ignition timing determination unit.

2. The engine control device according to claim 1,

   wherein the plurality of ignition timing maps include at least

   a first map indicating the relationship between the first parameter and the ignition timing of the engine, and
   a second map that indicates the relationship between the first parameter and the ignition timing of the engine and in which the ignition timing corresponding to the same first parameter is set to a retarded side compared to the ignition timing in the first map, and

the ignition timing map selection unit is configured to, in a case where the charge air amount insufficiency determination unit determines that the insufficiency of the charge air amount has occurred in a state where the first map is selected, switch the ignition timing map to be selected from the first map to the second map.

3. The engine control device according to claim 2,

wherein the parameter acquisition unit is configured to acquire a measurement value or an estimation value of the charge air amount, and

in a case where the measurement value or the estimation value of the charge air amount acquired by the parameter acquisition unit is Ga and a required air amount of the engine is Sa, the charge air amount insufficiency determination unit is configured to determine that the insufficiency of the charge air amount has occurred in a case where a ratio Ga/Sa of the measurement value or the estimation value Ga of the charge air amount to the required air amount Sa is less than or equal to a first threshold value.

4. The engine control device according to claim 3, wherein the ignition timing map selection unit is configured to, in a case where the ratio Ga/Sa is greater than or equal to a second threshold value that is greater than the first threshold value in a state where the second map is selected, switch the ignition timing map to be selected from the second map to the first map.

5. The engine control device according to claim 3, wherein the ignition timing map selection unit is configured to, in a case where a state where the ratio Ga/Sa is less than or equal to the first threshold value continues for a predetermined time in the state where the first map is selected, switch the ignition timing map to be selected from the first map to the second map.

6. The engine control device according to claim 1,

wherein a waste gate pipe that bypasses an exhaust turbine of the turbocharger is provided in an exhaust manifold connected to an exhaust side of the engine, and a waste gate valve is provided in the waste gate pipe, the engine control device is configured to control the charge air amount of the engine by controlling an opening degree of the waste gate valve, and

the charge air amount insufficiency determination unit is configured to determine that the insufficiency of the charge air amount has occurred in a case where the opening degree of the waste gate valve is in a fully closed position.

7. The engine control device according to claim 1,

wherein a charge air bypass pipe for releasing charge air of the engine from a space between the turbocharger and the engine is connected to an intake manifold connected to an intake side of the engine,

a charge air bypass valve is provided in the charge air bypass pipe,

the engine control device is configured to control the charge air amount of the engine by controlling an opening degree of the charge air bypass valve, and

the charge air amount insufficiency determination unit is configured to determine that the insufficiency of the charge air amount has occurred in a case where the opening degree of the charge air bypass valve is in a fully closed position.

8. The engine control device according to claim 1,

wherein an intake throttle valve is provided in an intake manifold connected to an intake side of the engine, the engine control device is configured to control the charge air amount of the engine by controlling an opening degree of the intake throttle valve, and

the charge air amount insufficiency determination unit is configured to determine that the insufficiency of the charge air amount has occurred in a case where the opening degree of the intake throttle valve is in a fully open position or in a case where the opening degree of the intake throttle valve is greater than a reference value of the opening degree corresponding to the operation state of the engine.

9. The engine control device according to claim 1,

wherein the engine control device is configured to execute a retarding control of retarding the ignition timing of the engine with respect to a timing as a reference in order to avoid abnormal combustion of the engine, and the charge air amount insufficiency determination unit is configured to determine that the insufficiency of the charge air amount has occurred in a case where the ignition timing in the retarding control is maintained at an ignition timing corresponding to a limit value of an amount of retarding from the timing as the reference for a predetermined time or longer.

10. The engine control device according to claim 1,

wherein a knocking sensor for detecting knocking of the engine is provided in the engine, and the charge air amount insufficiency determination unit is configured to determine that the insufficiency of the charge air amount has occurred in a case where knocking is detected using a signal from the knocking sensor.

11. The engine control device according to claim 1,

wherein an exhaust temperature sensor for measuring an exhaust temperature of the engine is provided in an exhaust manifold connected to an exhaust side of the engine, and the charge air amount insufficiency determination unit is configured to determine that the insufficiency of the charge air amount has occurred in a case where the exhaust temperature measured by the exhaust temperature sensor is higher than a reference value of the exhaust temperature corresponding to a fuel flow rate of the engine.

12. The engine control device according to claim 1,

wherein a concentration sensor for measuring a NOx concentration or an $O_2$ concentration of exhaust of the engine is provided in an exhaust manifold connected to an exhaust side of the engine, and the charge air amount insufficiency determination unit is configured to determine that the insufficiency of the charge air amount has occurred in a case where the NOx concentration detected by the concentration sensor is higher than a reference concentration corresponding to the operation state of the engine or in a case where the $O_2$ concentration detected by the concentration sensor is lower than a reference concentration corresponding to the operation state of the engine.

13. The engine control device according to claim 1, wherein the ignition timing control unit is configured to, in a case where the charge air amount insufficiency determination unit determines that the insufficiency of the charge air amount has occurred, shift a retard limit that is a limit of the ignition timing on a retarded side further to the retarded side.

14. The engine control device according to claim 1, wherein the ignition timing control unit is configured to, in a case where the charge air amount insufficiency determination unit determines that the insufficiency of the charge air amount has occurred, increase the number of stages of injected fuel during one combustion cycle of the engine or increase a fuel injection amount of a rear stage out of a fuel injection amount of a front stage and the fuel injection amount of the rear stage during the one combustion cycle of the engine.

15. An engine system comprising:

an engine;
a turbocharger; and
the engine control device according to any one of claims 1 to 14.

# FIG. 1

# FIG. 2

ENGINE CONTROL DEVICE    8

72    74    76    78

PROCESSOR    RAM    ROM    HDD

84

INPUT I/F —80    OUTPUT I/F —82

# FIG. 3

8

ENGINE CONTROL DEVICE

Ps, Ts, Ga, Ne, L → | PARAMETER ACQUISITION UNIT | 40

| CHARGE AIR AMOUNT CONTROL UNIT | 42  28

| FUEL INJECTION AMOUNT CONTROL UNIT | 44  26

| CHARGE AIR AMOUNT INSUFFICIENCY DETERMINATION UNIT | 46

| STORAGE UNIT | 47

| IGNITION TIMING MAP SELECTION UNIT | 48

| IGNITION TIMING DETERMINATION UNIT | 50

| IGNITION TIMING CONTROL UNIT | 52  23

# FIG. 4

# FIG. 5

START

CALCULATE Ga/Sa ~S101

DETERMINE SELECTED MAP ~S102

FIRST MAP          SECOND MAP

Ga/Sa ≤ Rth1? ~S103a          Ga/Sa ≥ Rth2? ~S103b

No          No

Yes          Yes

SELECT SECOND MAP Mi2 ~S104a          SELECT FIRST MAP Mi1 ~S104b

DETERMINE IGNITION TIMING USING SELECTED MAP ~S105

CONTROL IGNITION TIMING ~S106

END

# FIG. 6

```
                    ┌──────────────┐
                    │    START     │
                    └──────┬───────┘
                           │
                    ┌──────▼───────┐
                    │ CALCULATE    │────  S201
                    │   Ga/Sa      │
                    └──────┬───────┘
                           │
                           │              S202
                       ╱───▼────╲
                      ╱ DETERMINE ╲        SECOND MAP
                     ╱  SELECTED   ╲──────────────────┐
                     ╲    MAP      ╱                   │
                      ╲───┬───────╱                    │
                  FIRST MAP│                           │
```

- S202 DETERMINE SELECTED MAP
  - FIRST MAP
  - SECOND MAP

- S203a DOES Ga/Sa ≤ Rth1 CONTINUE FOR PREDETERMINED TIME OR LONGER?
  - No
  - Yes

- S203b DOES Ga/Sa ≥ Rth2 CONTINUE FOR PREDETERMINED TIME OR LONGER?
  - No
  - Yes

- S204a SELECT SECOND MAP Mi2

- S204b SELECT FIRST MAP Mi1

- S205 DETERMINE IGNITION TIMING USING SELECTED MAP

- S206 CONTROL IGNITION TIMING

- END

# FIG. 7

## INTERNATIONAL SEARCH REPORT

| International application No. |
| --- |
| **PCT/JP2022/037761** |

**A.    CLASSIFICATION OF SUBJECT MATTER**

*F02D 23/00*(2006.01)i; *F02P 5/145*(2006.01)i; *F02P 5/15*(2006.01)i; *F02P 5/152*(2006.01)i; *F02D 13/02*(2006.01)i; *F02D 45/00*(2006.01)i

FI:    F02P5/152; F02D45/00 366; F02D45/00 368A; F02D45/00 368Z; F02D13/02 B; F02D13/02 H; F02P5/145 H; F02P5/15 B; F02D23/00 N

According to International Patent Classification (IPC) or to both national classification and IPC

**B.    FIELDS SEARCHED**

Minimum documentation searched (classification system followed by classification symbols)

F02D23/00; F02P5/145; F02P5/15; F02P5/152; F02D13/02; F02D45/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| Y | JP 2017-25817 A (YANMAR CO LTD) 02 February 2017 (2017-02-02) paragraphs [0019]-[0091], fig. 1-16 | 1-13, 15 |
| A | | 14 |
| Y | JP 2015-68225 A (HONDA MOTOR CO LTD) 13 April 2015 (2015-04-13) paragraphs [0046]-[0057], fig. 3-4 | 1-13, 15 |
| A | | 14 |
| Y | JP 2008-309047 A (DENSO CORP) 25 December 2008 (2008-12-25) paragraphs [0029]-[0030], fig. 2 | 1-13, 15 |
| A | | 14 |
| A | JP 2017-57776 A (YANMAR CO LTD) 23 March 2017 (2017-03-23) paragraphs [0124]-[0141], fig. 25-29 | 1-15 |

☐ Further documents are listed in the continuation of Box C.          ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **16 November 2022** | **13 December 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
**Information on patent family members**

International application No.

**PCT/JP2022/037761**

| Patent document cited in search report | | | Publication date (day/month/year) | Patent family member(s) | Publication date (day/month/year) |
|---|---|---|---|---|---|
| JP | 2017-25817 | A | 02 February 2017 | US        2018/0216559    A1<br>paragraphs [0148]-[0229], fig. 21-37<br>WO        2017/013939    A1<br>EP             3327280    A1<br>KR   10-2018-0008744       A<br>CN             107850034       A | |
| JP | 2015-68225 | A | 13 April 2015 | (Family: none) | |
| JP | 2008-309047 | A | 25 December 2008 | US        2008/0312810    A1<br>paragraphs [0081]-[0082], fig. 6 | |
| JP | 2017-57776 | A | 23 March 2017 | US        2018/0298840    A1<br>paragraphs [0164]-[0172], fig. 25-29<br>WO        2017/047163    A1<br>EP             3351775    A1<br>CN             107949689       A<br>KR   10-2018-0043257       A | |

Form PCT/ISA/210 (patent family annex) (January 2015)

**EP 4 400 706 A1**

**Patent documents cited in the description**

- JP 2021168948 A

- WO 2017013939 A